**Europäisches Patentamt**

**European Patent Office**

**Office européen des brevets**

(19)

(11) Publication number: **0 118 791**

**A1**

(12) # EUROPEAN PATENT APPLICATION

(21) Application number: **84101532.4**

(22) Date of filing: **15.02.84**

(51) Int. Cl.³: **G 01 F 1/10**
**G 01 F 1/64, H 03 K 5/08**

(30) Priority: **16.02.83 US 467138**
**21.04.83 US 487226**

(43) Date of publication of application:
**19.09.84 Bulletin 84/38**

(84) Designated Contracting States:
**DE FR GB**

(71) Applicant: **WILGOOD CORPORATION**
**Box 1247**
**Dunnellon Florida 32630(US)**

(72) Inventor: **Feller, Murray F.**
**River Bend Road South**
**Dunnellon Florida(US)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath**
**Maximilianstrasse 58**
**D-8000 München 22(DE)**

(54) **Liquid impedance flow detectors.**

(57) The disclosed flow-detecting apparatus involves gating of phase-related excitation and sensed signals from electrodes close to a flow-activated rotor or other tracker in a liquid passage. A high-gain comparator provides peak-limited signals to a phase-reference gate. In one form, a pair of excitation electrodes are symmetrical in relation to a single sensing electrode. That electrode supplies a sensed signal to one comparator input, the other comparator input having fixed bias. In another form, a pair of sensing electrodes are disposed in an excitation pattern between a localized excitation electrode and a metal pipe that forms the passage and acts as a second excitation electrode. The sensed signals reach respective input terminals of a high-gain comparator and it responds to the difference between the inputs. Other configurations of the electrodes and their excitation are disclosed, including some that promote rejection of common-mode spurious signals. A comparator that receives flow-representing signals is stabilized against electrical unbalance by a negative feedback loop having a long time constant. A pair of flow detectors which may utilize common excitation electrodes have corresponding flow trackers at different regions of the flow passage and have corresponding excitation sources whose frequencies are distinctly different represents a further form of flow detector.

*FIG. 1*

# LIQUID IMPEDANCE FLOW DETECTORS

This invention relates to liquid flow detectors of the impedance type. In such apparatus, an assembly of excitation and sensing electrodes is exposed to liquid in a flow passage. A vaned rotor or other flow-driven element in the passage moves in cycles past the electrodes and varies the impedance paths among the electrodes.

A switching-mode phase detector is a particularly effective circuit for responding to the sensed signals to produce flow-representing pulses. A reference signal from the excitation source and the sensed signal are essentially in phase or out of phase, depending on the relationship between the rotor and the electrodes. The signals are phase-compared, resulting in trains of excitation-frequency impulses separated by gaps as the flow-driven element operates. Each train of impulses is converted into a flow-representing pulse. These pulses may be counted to measure the volume of liquid flow. Their frequency represents flow rate.

One form of impedance flow detector (U.S. Pat. 4,399,696) utilizes a pair of a-c excitation electrodes and a sensing electrode exposed to liquid in the space between them. The current paths through the space are modified by a vaned rotor that is turned by the flowing liquid. A phase detector operating in a switching mode responds to the excitation and sensed signals. Although this represents an excellent flow detector, its performance may be impaired by pick-up of spurious signals, especially if the sensed signal is weak. A liquid flow detector that is particularly effective under such conditions includes two sensing electrodes and an excitation electrode between them. The sensing electrodes are coupled, respectively, to the two input terminals of a differential amplifier. First one and then the other of the sensing electrodes has more direct exposure to the excitation electrode. The output of the differential amplifier is phase-compared to the excitation signal in deriving the flow-representing pulses. This form of apparatus is largely immune to common-mode pick-up of ambient spurious signals, e.g. 60 Hz.

Flow detectors of the foregoing types, whether having one or two sensing electrodes, may be unstable or wholly inoperative due to unbalance in the apparatus, such as may arise during manufacture or during prolonged use. An object of the invention resides in providing novel switching-mode flow detectors that are largely immune to a wide latitude of unbalance. As applied to flow detectors of the type having two sensing electrodes coupled to the (+) and (-) inputs of a comparator, a long time-constant negative feedback loop is connected from the gated-and-filtered or the gated output to the (-) input of the comparator. That feature corrects for considerable unbalance in the inputs to the comparator.

The type of flow detector having a single sensing electrode as described above is also greatly improved by addition of a long-time-constant negative feedback loop. The appearance of certain spurious signals in the output is reduced, and the effect of a latitude of electrical unbalance is largely eliminated, whether that unbalance is due to asymmetry of the exciting electrodes in relation to the sensing electrode, unequal exposure of the excitation electrodes, or other factors. Perhaps more important, the inclusion of the negative feedback loop has the notable advantage of extending the latitude of operation of this form of flow detector to low resistivity liquids.

With one exception, the single sensing-electrode type of flow sensors described in detail below do not involve a comparison between two input signals. Therefore, it is not necessary to use a comparator for the sensed signal in most flow detectors having only one sensing electrode. Where the sensed signal is weak, a high-gain amplifier would serve. Indeed, where a sensed-signal comparator is used in the type of apparatus having only a single input signal, the comparator acts essentially as a high-gain amplifier arranged to have a bias-dependent switching point.

U.S. patent 4,399,696 describes flow detectors incorporating a multiple-rotor probe. Such flow detectors are improved by incorporating a long-time-constant negative feedback loop in the detector circuit of each rotor. Those multiple-rotor flow detectors are further improved by providing different frequencies for excitation and phase-reference for each of the multiple rotors, to better assure mutual isolation between the detector circuits of the respective rotors.

It is contemplated that a rotor of metal may be used for causing appropriate distortions of the excitation pattern as the rotor's blades or vanes sweep past the sensing electrodes. In the illustrative examples below, the rotor is of high resistivity material (compared with the resistivity of the liquid) and the excitation and sensing electrodes are in a configuration such that one of the sensing electrodes is alternately shielded from, and exposed to, one of the excitation electrodes while, conversely, the other of the sensing electrodes is alternately exposed to and shielded from that excitation electrode. Only partial shielding is needed.

Each of the foregoing flow detectors, as described, includes a flow-activated turbine-type rotor. Signals are developed at a single sensing electrode or at a pair of sensing electrodes as a result of vanes of the rotor passing by the excitation and sensing electrodes. While vanes of a rotor are presently regarded as most suitable, there are known alternatives wherein flow-activated sensed elements can be adapted to present purposes as substitutes for a vaned rotor. For example, a flow metering device is known in which a lightweight ball is induced to orbit in a circular liquid-flow passage of the flow detector. Such a ball can be made of the same high-resistivity material as the vaned rotor and utilized for cyclically distorting the excitation current path in the liquid in the region of the sensing and excitation electrodes. The vanes of a turbine rotor and the orbital ball and equivalents

4

which are arranged, in common, to vary the output at a sensing electrode or at a pair of sensing electrodes in the described flow detectors are referred to herein generically as "orbital flow trackers" or "flow trackers".

The nature of the invention and further novel features and advantages will be better appreciated from the following detailed description of various illustrative embodiments of the invention, these being shown in the accompanying drawings.

FIGURE 1 is an elevation, partly in cross-section, of a flow-sensing probe useful in the novel flow detectors;

FIGURE 2 is a side elevation of the probe shown in Fig. 1 as seen from the left;

FIGURE 3 illustrates the probe of Fig. 1 installed in a pipe, portions being shown in cross-section;

FIGURES 4 and 5 are cross-sections of the probe of Fig. 1 when viewed from the planes 4—4 and 5—5 of Fig. 1;

FIGURE 6 is a diagram of an in-line flow sensor;

FIGURE 7 is a diagram of an excitation signal source for the circuits of Figs. 8A, 8B and 8C;

FIGURES 8A, 8B, and 8C are diagrams of flow detectors using the flow sensor (or a modification) shown in Figs. 1 - 5; and

FIGURE 9 is a modification of the flow detectors shown in Figs. 8A, 8B, and 8C.

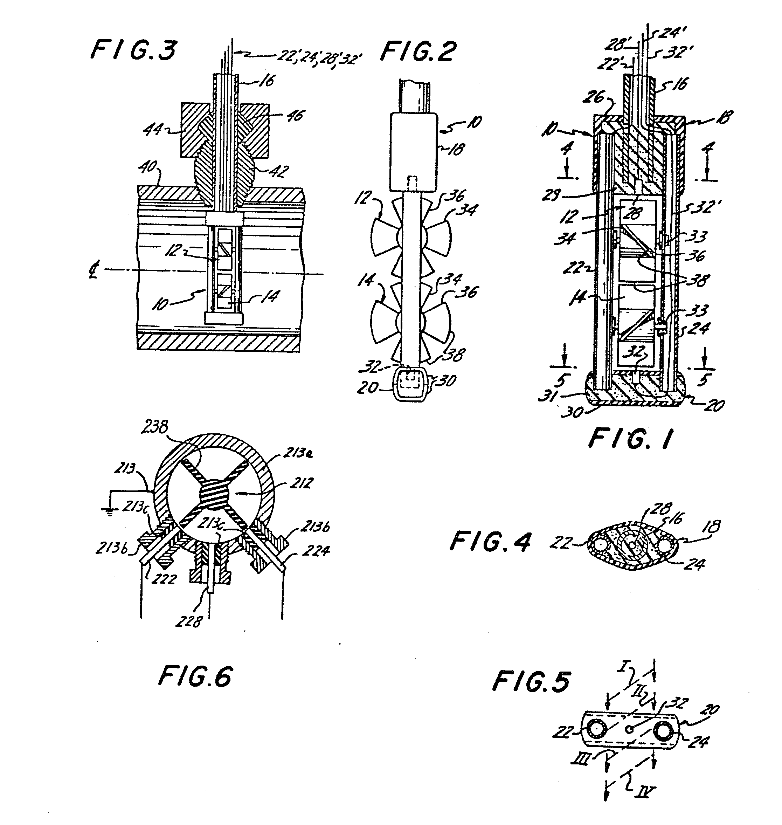

In Figs. 1 through 5, probe 10 has two rotors 12 and 14, and includes a mounting structure consisting of supporting tube 16, a top support 18 and a bottom support 20, and tubes 22 and 24 that act with supports 18 and 20 as a frame for supporting the rotors.

Top support 18 comprises an inverted cup 26 formed of molded plastic providing partial sockets for tubes 22 and 24. Metal tube 16 extends into inverted cup 26 through the end wall of the cup. Sensing (or excitation) electrode 28 has its lower end exposed and is close to rotor 12. A mass of rigid potting material 29, such as epoxy resin fills the cup. The potting material provides electrical insulation, it unifies tube 16, tubes 22 and 24 and electrode 28, and it is largely immune to deterioration when exposed to the fluid in the pipe which is considered to be tap water in this discussion.

Lower support 20 is conveniently formed of two channels of plastic 30 (Fig. 2) with their edges in abutment, forming a cavity. Tubes 22 and 24 extend through the upper channel and are locked in a mass of rigid potting material 31 such as epoxy resin that fills the channels. Electrode 32 is also locked in the potting material and has its upper end exposed and close to rotor 14.

As will be seen, tubes 22 and 24 serve a structural role but they also constitute excitation (or sensing) electrodes. An insulated wire 32' extends from sensing electrode 32 through the hollow of one of the tubes, and out through cup 18, a hole in tube 16, thence upward and out of tube 16. Insulated wires 22' and 24' are connected to tubes 22 and 24 and they extend through holes in tube 16 to emerge from the upper end of the probe. Insulated wire 28' is connected to electrode 28 and extends out of the probe via tube 16. Electrodes 22, 24, 28 and 32 should be made of conductive material immune to attack by the fluid, such as brass or stainless steel where the sensed fluid is tap water.

Each of the rotors 12 and 14 has a shaft (not shown) extending into suitable bearings 33 in tubes 22 and 24. Making these bearings of graphite including sapphire thrust bearings promotes nearly friction-free rotation and long life. The blades or vanes of the rotor extend from a hub. They may be spiral-shaped and their leading and trailing edges are thinned, being in many respects like true turbine blades. Between the thinned extremities 34, 36, the blades may have appreciable thickness and the longitudinal edges may have distinct width, for example 0.025 inch for a rotor of 0.800 inch diameter with a hub of 0.200 inch diameter and 0.45 inch long. These edges sweep opposite electrodes 28 and 32, for example 0.125 inch diameter, with a clearance of 0.040 to 0.050 inch from the path of the rotor-blade edges. Electrodes 22 and 24 in an example are 1/8-inch (outer diameter) tubes with the tube axes spaced 0.67 inch apart.

6

In this connection, further dimensions may be of interest. The diameter of the hole in the wall of the pipe through which the probe of the above example is to be inserted may be 0.9 inch. A probe-carried four-blade rotor with its diameter of 0.80 inch and 0.45 inch length can be inserted in the 0.9-inch hole if necessary by positioning the rotor blades at 45° to the length of the probe. The vanes or blades of the two rotors form spirals of mutually opposite sense or, more simply, they slope oppositely in relation to the fluid path, causing opposite directions of rotation. The outermost edge of a blade may slant 30° to a plane containing the rotor axis and intersecting the outermost edge of the blade.

As seen in Fig. 3, rotors 12 and 14 when optimally installed are disposed symmetrically at opposite sides of the centerline C/L of pipe 40 whose cross-section is a circle. A hollow plug or stub 42 has pipe thread that serves as a closure, sealing the probe-mounting hole in the wall of pipe 40. Tube 16 extends into the pipe, through stub 42 and to an external clearance position where wires 22', 24', 28' and 32' are accessible. Clamp 44 that threads onto stub 42 tightens gasket 46 against tube 16 to form a water-tight seal.

It is evident that the maximum dimension of the cross-section of the probe is limited at all parts of the length of the probe. That maximum dimension is limited by the diameter of the hole through which the probe enters the pipe. Accurate, reliable operation of a rotor depends on making the rotor large, yet it must be small enough to enter the hole in the pipe. The rotor would become tiny if the probe were to include significant flow-straightening vanes at the leading and trailing ends of the rotor, were such vanes long enough to preclude serious error due to anomalies in the flow of the water. Here, accuracy is achieved and yet flow-straighteners are omitted, by using multiple rotors and combining their outputs. The output pulses from the rotor sensors can be converted into analog signals and added, or (see below) the pulse trains can be combined and counted.

In Fig. 5 a representative turbine blade is shown in broken lines, in four successive positions I, II, III and IV that are assumed during continued operation of rotor 32. The water represents a volume through which current flows due to excitation of electrodes 22 and 24. The turbine blade is of polysulfone or polypropylene or special grades of nylon or other insulation whose resistivity is higher than that of tap water. The nylon resistivity is from $10^{11}$ to $10^{14}$ ohm-centimeters, and the other materials have still higher resistivities. The rotor blade in positions I and IV has little effect on the electrodes. (The successive blades of the rotor passing the electrodes cause repetitions of the operation described for this blade, presuming wide separation of the blades, $90^{\circ}$ in this embodiment.) In position II, the blade acts as a barrier in the distributed current paths through the water between electrodes 22 and 32, at which time the coupling between electrodes 24 and 32 is at a maximum. The reverse couplings prevail when the blade is at position III.

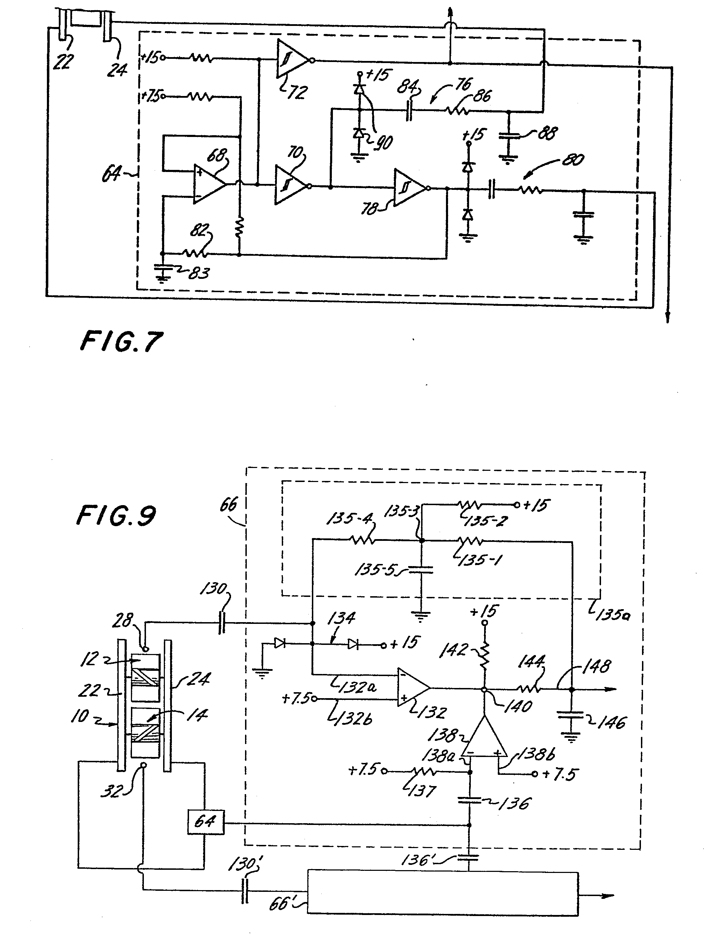

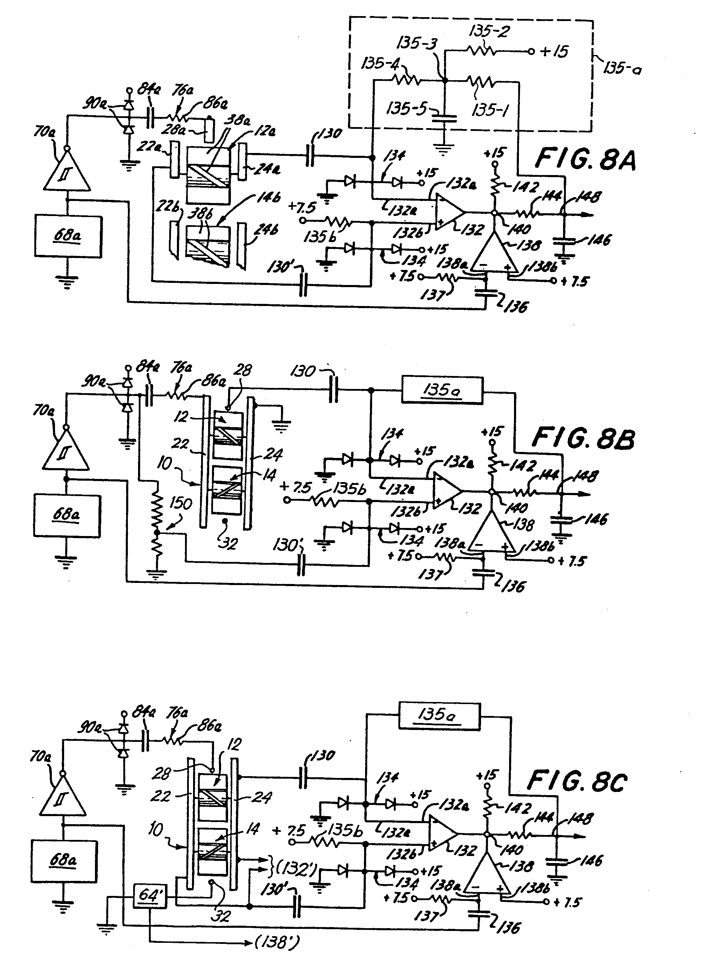

Fig. 7 shows an excitation signal source 64 for flow detectors using the probes of Figs. 1 – 5. The excitation source 64 shown provides square-wave excitation for energizing electrodes 22 and 24, at 10 to 40 kHz, for example. It also provides a reference signal for the flow detection circuits of Figs. 8A, 8B, 8C and 9.

Source 64 includes high-gain open-collector comparator 68 connected to two identical inverting Schmitt triggers 70 and 72. The square-wave output of trigger 70 is connected via protective circuit 76 to electrode 24. The output of trigger 70 also drives an identical inverting Schmitt trigger 78 whose square-wave output is connected via a circuit 80 (the duplicate of circuit 76) to electrode 22. A feed-back path including series resistor 82 and shunt capacitor 83 extends from the output of trigger 78 to the (-) input of comparator 68, for developing square-wave oscillation. Protective circuit 76 includes a series capacitor 84, a series resistor 86 and a shunt capacitor 88 which are, for example, 0.1 Mfd, 1.0k ohms, and 220 pf, and diodes 90.

8

This circuit 76 provides protection for the solid-state devices of the circuit against damage due to external pulses.

Fig. 8A shows a flow sensor similar to that of Figs. 1-5, together with a flow detection circuit. In Fig. 8A, a flow sensing probe is shown having two flow-activated rotors 12a and 14b in all respects like rotors 12 and 14. Rotor 12a is supported for rotation rotation between metal tubes 22a and 24a while rotor 14b is supported for rotation between metal tubes 22b and 24b. Tubes 22a and 22b are unified by an insulating rod (not shown) while tubes 24a and 24b are unified by another insulating rod. The unified metal tubes 22a, 22b and 24a, 24b are supported in the same manner as tubes 22 and 24 in Figs. 1-5. An electrode 28a is supported by insulation, like electrode 28. The illustrative dimensions of the parts in.Figs. 1-5 are suitable for correspondingly numbered parts in Fig. 8A.

A further electrode (not shown) is part of the probe of Fig. 8A corresponding to electrode 32, correspondingly located and supported. While the probe of Figs. 1-5 is usable in a conduit of either metal or plastic, the probe represented in Fig. 8A requires a further electrode, represented by ground in Fig. 8A. That electrode physically may be a portion of metal tube 16 exposed to the liquid or the excitation-return may be provided by pipe 40, when a metal pipe is used. Indeed, sensing electrodes 22a, 24a with input couplings 130, 135a and 130', 135b contribute to the excitation-return.

Fig. 8A shows an effective circuit for the electrodes associated with rotor 12a. A duplicate circuit (not shown) may be used for the electrodes of rotor 14b, and the outputs of the two circuits may be combined and supplied to signal-utilization means as described in connection with Fig. 9.

In Fig. 8A, a square-wave oscillator 68a (like the oscillator in excitation source 64) is coupled to electrode 28a while the ground connection of the oscillator is connected to pipe 40 or tube 16. This sets up a conduction pattern in the liquid, with an electric field gradient becoming progressively more concentrated near electrode 28a.

9

Electrodes 22a and 24a assume the potential of the field in which they are disposed. Their circuit connections are insulated from the liquid. These electrodes are coupled via d-c isolation capacitors 130, 130' to input electrodes 132a and 132b of an open-collector comparator 132. These input electrodes have pairs of spike-protection diodes 134. Feedback bias network 135a is connected to (-) input 132a. Resistor 135b provides stable bias, e.g., 7.5 volts.

Oscillator 68a is coupled via capacitor 136 to comparator 138. Input terminal 138a is connected to the half-voltage terminal of the d-c energizing supply via load resistor 137, while input terminal 138b is connected directly to the same half-voltage point. The collectors of comparators 132 and 138 are joined at terminal 140 which extends to the positive d-c energizing terminal via load resistor 142.

Negative feedback loop 135a comprises a pair of resistors 135-1 and 135-2 connected to each other at junction 135-3, and the series-connected resistors are connected between the positive d-c supply terminal (+15) and the output junction 148. Resistor 135-4 couples the bias of junction 135-3 to the (-) input 132a of signal comparator 132. Capacitor 135-5 is connected between junction 135-3 and ground. (Resistor 135-1 may be connected to junction 140, the unfiltered gating or AND-ing output point of comparators 132 and 138. However, because capacitor 135-5 is electrolytic and high-frequency pulse trains appear at junction 140, the illustrated circuit is preferred.)

Resistors 135-1 and 135-2 and capacitor 135-5 have large values. In an example, these are approximately 5 and 10 megohms and 10 Mfd., respectively, and capacitor 135-5 is of low-leakage design. Accordingly, the time constant of the feedback loop is quite long. Resistor 135-4 in this example is 100,000 ohms, but since it does not carry capacitor-charging or -discharging current, it does not affect the time constant. In this example, comparators 132 and 138 are National Semi-conductor type LM393, the d-c supply is 15 volts and the bias at the (+) input 132b via resistor 135b is 7.5 volts.

In operation, sensing electrode 22a is at times partly shielded from excitation electrode 28a by a vane or blade 38a of rotor 12a that serves as a barrier and at other times electrode 28a is exposed to sensing electrode 22a. Stated otherwise, the excitation field developed between the pipe and excitation electrode 28a is alternately impeded and freed in the region of sensing electrode 22a as the vaned rotor is driven by liquid flow. Conversely, sensing electrode 24a is alternately exposed freely and shielded from the excitation field near electrode 28a as the same blades of the rotor sweep past the sensing and excitation electrodes. (Fig. 5 demonstrates this action in relation to sensing electrode 32.) Comparator 132 develops enormous amplification of the difference between the potential at its input terminals 132a and 132b, and switches "off" and "on", or low or high, depending upon which of its input terminals has the greater potential. The polarity of excitation electrode 28a reverses at the oscillator frequency. For example, this may be 10kHz to 80kHz, typically 40kHz, a frequency that is several or many times the frequency at which the rotor blades pass the excitation electrode. The output of comparator 132 is a square wave whose phase is dependent upon which of the sensing electrodes 22a, 22b is more directly exposed to the excitation electrode when that electrode has negative excitation. However, the phase of the signal input does not change. Notably, comparator 132 responds to like-phase input from electrodes 22a and 24a by producing phase-reversing output, either in phase with — or out of phase with — the reference signal to input 138a.

Comparators 132 and 138 have open collectors. Their common output terminal is high only when neither of these comparators drives its output low. Thus, depending on the phase of pulses from comparator 132 in relation to the "on" times of comparator 138, a series of positive-going pulses does — or does not — appear at junction 140. These positive pulse trains are converted by the low-pass filter represented by series resistor 144 and shunt capacitor 146 to develop square-wave flow-representing pulses at terminal 148 corresponding to the rotor's rotation. This signal can be used variously, as in a volume-of-flow indicator or in a rate-of-flow indicator or other utilization device (not shown).

In the foregoing discussion, it has been tacitly assumed that the steady-state bias provided at (-) input 132a is stable and supports the described performance of the circuit as the rotor turns. The effect of feedback loop 135a under various conditions is to assure the same response of comparator 132 as flowing liquid turns rotor 12a despite a wide variety of conditions in which there is a sustained unbalance between the sensed signals applied to inputs 132a and 132b.

It may be considered that the power is turned on but that no signals are applied to inputs 132a and 132b of the signal comparator 132. Also, at this time let it be considered that the output of comparator 138 is not clamped low (while negative half-waves are applied to input 138a) and therefore junction 140 can rise above d-c ground potential and it can even approach +15 volts via resistor 142. Comparator 132 must develop an output, on the average, so that the bias provided by the negative-feedback loop 135a maintains the (-) input 132a very close to the bias at the (+) input 132b. The explanation of how this steady-state condition is attained under numerous possible starting conditions is omitted in the interest of conciseness. The output voltage of signal comparator 132 when capacitor 135-5 is charged to provide this equilibrium bias at the (-) input 132a is 3.75 volts (in the example considered above) where the resistance of resistor 135-1 is half that of resistor 135-2. Thus, 7.5 volts is developed across resistor 135-2. Disregarding resistor 144, 3.75 volts is developed (on average) across resistor 135-1 and junction 140 is at an average of 3.75 volts above ground at equilibrium. The bias provided at input 132a under these conditions may be called the "d-c equilibrium bias."

It may be considered that negative signal excursions are applied at the (-) imput of phase-reference comparator 138 and concurrent signal excursions are applied at the (-) and (+) inputs 132a and 132b of signal comparator 132. (No attention is needed for the positive signal excursions at input 138a since, at those moments, junction 140 is clamped low or virtually at ground potential by comparator 138.) If the peaks of the signals applied to the inputs 132a and 132b are precisely equal for a prolonged period, the same behavior of signal comparator 132 develops in establishing bias at (-) input 132a as in the case of no signal input, as discussed above. The bias developed for input 132a by the bias feedback loop 135a is equal to the d-c equilibrium bias. The signal peaks applied to the (+) input 132b may be constantly different from the signal peaks applied at the (-) input during a protracted period, and then the bias developed at input 132a by the feedback loop 135a shifts a small amount from the d-c equilibrium bias to a new equilibrium bias. The signal comparator 132 operates in such a manner that the totals of bias plus signal peaks at inputs 132a and 132b have the same relationship under conditions of a sustained difference between the half-waves at inputs 132a and 132b as in the case of no signal input.

In considering the circuit operation, it may be helpful to note that, in practice, the input signals are small compared to the 7.5 volt bias at input 132b. The peak-to-peak voltage to produce the a-c excitation field may be 15 volts, yielding typical sensed signals of about one-tenth of that voltage. Furthermore, practical forms of the apparatus operate well at much lower excitation voltages.

In normal operation of the flow sensor, the rotor turns and the amplitude of the impulses to the (+) and (-) inputs change as the rotor vanes variably distort the excitation field. Such rapid variations are in a sense recognized in the signal comparator to the extent that they deviate from the long-period unbalance (if any) of the input signals as represented by the biases (adjusted and fixed) of the inputs 132a and 132b of the signal comparator. The comparator operates at the mean of the dynamic range of signal variations that occur due to turning of the rotor.

The circuit of Fig. 8A may be used in Fig. 6 that illustrates a specifically different configuration of sensing and excitation electrodes, but they operate alike and have common properties. Numerals in Fig. 6 are of the "200" series for corresponding parts in Figs. 1-5 bearing "00" series numerals and for corresponding parts in Fig. 8A bearing "100" series numerals.

Fig. 6 illustrates an in-line flow sensor, as distinguished from the probe sensor of Figs. 1-5. Metal pipe 213a represents one excitation electrode 213, and rod 228 represents the opposite excitation electrode. Rods 222 and 224 are sensing electrodes. All three rods are supported in holes in the wall of the pipe by bushings 213b, separated from the bushings by water-tight electrical insulation 213c. Rotor 212 is of high resistivity insulation, like rotor 12, of the same material and dimensions. Rotor 212 has vanes or turbine-like blades 238 that sweep close to the ends of rods 222, 224 and 228 as described in detail in US Pat. 4,333,354 mentioned above. The description of the electrodes, pipe and rotor in that patent is incorporated here by reference.

The flow sensor in Fig. 6 can utilize the circuit of Fig. 8A, and for that reason the description of the circuit and its operation are not repeated in detail here.

The flow sensor of Fig. 8A includes two sensing electrodes that are affected in opposite senses as the rotor turns. The vanes of the rotor introduce shielding between the excitation electrode 28a and the sensing electrodes 22a and 24a in alternation. Where the liquid flows in a metal pipe, the pipe can serve as the ground return of the excitation source (as in Fig. 6). Other arrangements for the a-c return can be devised. However, it may be considered important to provide a flow sensor that can be used in metal or plastic pipe and which has a simplified

14

electrode assembly and furthermore, which can utilize the features of Fig. 8A. Such a flow sensor is shown in Fig. 8B, being optionally the same dual-rotor probe as in Figs. 1-5.

In Figs. 8A and 8B, the same reference numerals are used for the identical parts, except that the numerals applied to the parts of the probe in Fig. 8B are the same as those of Figs. 1-5. The operation of the apparatus of Fig. 8B is the same as that described in connection with Fig. 8A, except as noted hereinafter.

In Figs. 8B, the two metal posts 22 and 24 of probe 10 are used as an a-c excitation electrode and an a-c ground, respectively. An a-c current and field pattern is developed in the liquid between these metal-post electrodes that affects sensing electrode 28 variably as vaned rotor 12 turns. In this way, a flow-representing train of square-wave pulses is impressed on the (-) input 132a in Fig. 8B.

The flow sensor shown in Fig. 8A includes two sensing electrodes for comparator 132. In Fig. 8B, a substitute a-c signal is provided for (+) input 132b. This substitute signal has the same phase as the signal picked up by electrode 28 and it is in phase with the phase reference signal of comparator 138. The substitute a-c signal is obtained from a voltage divider 150.

The voltage of the signal to the (+) input 132b is set at the mean of the amplitudes provided by electrode 28 as rotor 12 turns. Fixed bias is provided by resistor 135b for the (+) input 132b, while bias that is self-adjusting is provided by the same biasing negative feedback loop 135a as shown in Fig. 8A and described above.

Negative feedback bias loop 135a in Fig. 8B is the same in construction and operation as feedback loop 135a shown in Fig. 8A and described above. The fact that the signal to input 132b in Fig. 8B is a constant-magnitude signal narrows the range of the amplitude difference available to signal comparator 132. However, the electrode assembly is simplified as compared to that of Fig. 8A and therefore this modification may well be attractive.

0118791

In Fig. 8B, posts 22 and 24 also provide a-c excitation about electrode 32 for the second rotor 14, where two rotors are used as in Figs. 1-5. A sensed-signal circuit for electrode 32 is to be provided, duplicating that of electrode 28.

As noted above, the electrode assembly of Fig. 8B can be used in plastic or metal pipes, since the probe incorporates opposite paired a-c excited electrodes.

A modification of Fig. 8A is shown in Fig. 8C. The dual rotor probe of Fig. 8C may be that in Figs. 1-5, so that the same part numbers are used for the probes in both of those figures. A metal pipe or other suitable a-c return for the excitation field is used with the probe of Fig. 8C.

In common with Fig. 8A, signal comparator 132 in Fig. 8C has input from two sensing electrodes 22 and 24 that are connected to the comparator inputs 132a and 132b. These inputs receive in-phase signals that are in phase with the input to comparator 138. The apparatus of Fig. 8C has all of the advantages of the apparatus in Fig. 8A. However, the apparatus of Fig. 8C has a simpler and more rugged dual-rotor probe.

The sensor 32 in Fig. 8C is coupled to a separate a-c excitation source and isolation coupling circuit 64' duplicating the a-c excitation means provided for electrode 28. Excitation source 64' is also coupled to a phase reference comparator or gate 138' (not shown) and connections are provided from sensing electrodes 22 and 24 to a signal comparator 132' (not shown). The circuit of comparators 132' and 138' is the same for detection of flow at rotor 14 as that shown for flow detection at rotor 12. However, one excitation and phase-comparison frequency is used for flow detection at rotor 12 and a substantially different frequency is used for flow detection at rotor 14. For example, the frequency of oscillator 64a may be 10kHz and the frequency of excitation source 64' may be 14kHz. Therefore, even though sensing electrodes for both rotors 12 and 14 are used in common, the flow detection circuits for each rotor 12, 14 responds to its related excitation and phase detection frequency. Of course the frequencies chosen must be compatible, in the sense of avoiding beat frequencies that would simulate filtered flow-representing signals at junction 148.

In Figs. 8A, 8B and 8C, the phase comparator 138 serves to gate the output junction 140 off during alternate half-cycles of excitation. The input connections to comparator 138 could be reversed from that shown, and phase reference comparator 138 could turn junction 140 off during negative-going sensed signals to the signal comparator 132. In that case, the signal comparator 132 would respond by having its output go high whenever the (+) input 132b is higher than the signal to the (-) input 132a. With the reversed phase connection of phase comparator 138, this condition develops at intervals during travel of the rotor vanes past the electrodes.

In all of the foregoing embodiments, the signal applied to the excitation electrodes alternates in polarity. This excitation is developed in Fig. 7 by two trains of pulses that could polarize the excitation electrodes oppositely even if coupling capacitors were omitted. However, a-c electrode excitation is ensured by coupling capacitors in all of the embodiments. Such a-c excitation protects the electrodes from erosion due to electroplating action that would occur with most electrode materials were unidirectional pulses used for excitation. It should be moted, however, that the novel flow detectors would function with unidirectional-pulse excitation.

In Fig. 9 (described below) the polarity of the sensing electrode 28 reverses at the excitation frequency, its phase changing in relation to a reference phase in dependence on its exposure more directly to one or the other of the excitation electrodes. The phase of the sensing electrode(s) in Figs. 8A, 8B and 8C does not change as the rotor turns, but in each of those embodiments, the sensed signal comparator 132 provides output that reverses in phase as the rotor turns. All of these embodiments use a phase-reference signal to convert the sensed signal(s) into trains of excitation-frequency pulses separated by gaps, representing sweep of the rotor vanes past the electrodes.

The time constant for the feedback loop 135a can be calculated on the basis of capacitor 135-5 in series with an equivalent circuit of resistors 135-1 and 135-2 in parallel. For the values given, the time constant is:

$$R \cdot C = [(5 \times 10)/(5 + 10)] \cdot 10 = 33 \text{ sec.}$$

In an example, using a commercial size and design of flow sensor of the in-line type as in Fig. 6 (in contrast to the probe type of flow sensor as in Figs. 1-5) the lowest flow rate to be monitored is about one gallon per minute; and at that flow rate in this example, the four rotor vanes (Fig. 6) pass the electrodes and produce pulses four times per second. The example of a 33-second time constant of the feedback loop is much longer than the ¼-second interval of the flow-representing pulses in this example. Among the factors entering into the determination of time constant are: the cost of the largest economical low-leakage capacitor, the design of the flow detector and its type (probe or in-line), and the slowest rate of rotor rotation in the linear range of the flow sensor. If the time constant is made too short, flow-representing output pulses could interfere with the stabilizing purpose of the feedback loop. Generally, a time constant of 10 to 100 seconds may be suitable. As already indicated, the actual time constant used will depend on a variety of considerations.

The choice of the excitation frequency affects the maximum rate of flow that can be detected dependably. Empirically, the minimum excitation frequency should be twenty times the maximum frequency of the demodulated signals A (Fig. 9). In an example, using a rotor dimensioned as above, the frequency of signals A is 400 Hz at a maximum flow rate of 30 gallons per minute. Using the above empirical 20/1 ratio of excitation frequency to the frequency of vanes passing the sensing electrodes, the excitation frequency should be 10 kHz or higher.

Fig. 9 incorporates the flow sensing probe of Figs. 1-5, bearing the same numerals. The probe comprises a single flow-sensing electrode for each rotor and a pair of a-c excitation electrodes symmetrically disposed at opposite sides of each sensing electrode. Accordingly, the phase of the signal at each sensing electrode undergoes reversals as each rotor vane sweeps past the electrodes as represented in Fig. 5. Fig. 9 also includes the a-c excitation source 64 of Fig. 7.

Flow-detection circuit 66, to a large extent, has the same interconnections and components as in Fig. 8A, so that the same numerals are used in those figures for corresponding parts. However, the two circuits operate quite differently in at least one respect. The sensing comparator of Fig. 8A has a pair of like-phased input signals whose relative amplitudes change, and the sensing comparator converts the input amplitude differences into in-phase or out-of-phase output relative to the phase-reference signal of comparator 138. In contrast, only input 132a of comparator 132 in Fig. 9 receives a signal, and the phase of the sensed signal reverses periodically in relation to a reference signal as the rotor turns. In Fig. 9, comparator 132 amplifies and squares the input signal above a switching level. As in Fig. 8A, the output of comparator 132 in Fig. 9 is gated or AND-ed with the phase-reference signal. The gating function could be performed by an AND logical circuit such as a diode AND circuit or open-collector operational amplifiers.

Negative feedback loop 135a in Fig. 9 is connected between the (-) input of comparator 132 and a flow-representing output point 148 (or 140). An operational amplifier as well as a suitable form of high-gain amplifier could replace comparator 132 (noting that comparator 132 has only one sensed-signal input 132a). The feedback loop in the circuit of Fig. 9 compensates for sustained asymmetries in signal provided by the probe. Loop 135a establishes a quiescent point that maintains high sensitivity to sensed signals that may be less than 10 millivolts. The negative feedback loop 135a extends the operating range of the flow detector in Fig. 9 to liquids whose resistivity is quite low.

The effect of the negative feedback loop in Fig. 9 is to shift the operating point of the comparator at which switching occurs so as to maintain maximum sensitivity to input signals from the sensing electrode. It also renders the output signals symmetrical and thereby avoids distortion. A severely distorted output signal could resemble a double-frequency flow-representing signal, with consequent risk of error.

The dual-rotor probe of Fig. 9 is equipped with a second flow-detecting circuit 66' for sensing electrode 32. Circuit 66' has a coupling capacitor 136' that provides the phase reference signal. There is virtually no interaction between the flow detection performed by each of the rotors and their related circuits.

In each of the flow detectors described above and shown in the drawings, a turbine-type rotor is utilized as the flow-activated device having vanes of insulation that sweep through the excitation pattern in the liquid at the sensing electrode(s). As indicated above, a ball of insulation in a known orbital-ball type of flow sensor can be used as a substitute for rotor vanes, when the ball is arranged to travel past the sensing and excitation electrodes of the described flow detectors. Both the ball and the rotor vanes move in an orbit, but similar flow-activated elements that oscillate with like effect are contemplated. Such flow-activated elements, mentioned above, are herein called flow trackers.

Some of the attributes of the novel flow sensors have special value in relation to probe sensors having multiple rotors and their respective circuits, in simplifying the required number of electrodes and in adapting the flow sensor to use in pipes made of insulation and therefore not available for use as an excitation electrode. However, even though most of the illustrative embodiments are in the form of probe-type sensors and involve multiple rotors, many of the novel features apply fully to probe sensors having a single rotor and to in-line flow sensors that typically have only one rotor.

Variations in the foregoing illustrative embodiments and varied applications of the novel features thereof will occur to those skilled in the art and therefore the invention should be construed broadly in accordance with its full spirit and scope.

CLAIMS:

1. Flow-detecting apparatus including means forming a liquid flow passage, a cyclic fluctuating excitation source, means for developing an electric pattern in liquid in a region in said passage and for sensing said electric pattern, said pattern developing and sensing means including (a) one or more excitation electrodes connected to said excitation source and (b) one or more sensing electrodes, a flow-driven tracker having at least one pattern-distorting element movable cyclically through said region, signal-receiving means connected to said sensing electrode or electrodes, and gating means for combining the output of said fluctuating excitation source and of said signal-receiving means to provide signals and signal-interruption intervals in dependence on the relationship of said pattern-distorting element to the sensing electrode or electrodes, said signal-receiving means having a bias-controlled switching characteristic, and a feedback loop having a long time constant compared to the period of said signals and signal-interruption intervals at the lowest flow rate to be monitored.

2. Flow-detecting apparatus as in claim 1 wherein said signal receiving means includes a peak-limiting high-gain amplifier.

3. Flow-detecting apparatus as in claim 1 wherein said signal receiving means includes a comparison device of the open-collector type having high-gain peak-limiting characteristics.

4. Flow-detecting apparatus as in any of claims 1-3 wherein said tracker is of electrical insulation having high resistivity compared to the resistivity whose flow is to be detected.

5. Flow-detecting apparatus as in any of claims 1-3 wherein said tracker is a flow-driven rotor having vanes of high electrical resistivity compared to the resistivity of the liquid whose flow is to be detected, turning of said rotor causing said vanes to introduce a varying shielding effect between said excitation electrode or electrodes and said sensing electrode or electrodes.

6. Flow-detecting apparatus as in any of claims 1, 2, 4 or 5 wherein said signal-receiving means includes a signal-comparison device having positive and negative inputs such that signals to the

22

positive input develop like output of said device and signals to the negative input develop inverse output of said device, said sensing electrode or electrodes being connected to one of said inputs or to said inputs, respectively, said negative feedback loop being connected from an output signal portion of the apparatus to said negative input of the signal-comparison device.

7. Flow-detecting apparatus as in any of claims 1-6 wherein said gating means blocks the output of said signal-receiving means during alternate half-cycles of said excitation source.

8. Flow-detecting apparatus as in any of the preceding claims wherein there are a pair of sensing electrodes and there is an excitation electrode between said sensing electrodes.

9. Flow-detecting apparatus as in any of claims 1-7 wherein there are a pair of excitation electrodes and there is a sensing electrode between said excitation electrodes.

10. Flow-detecting apparatus as in any of claims 1-9 wherein the frequency of said excitation source in much higher than the highest frequency of the tracker passing the sensing electrode or electrodes.

11. Flow-detecting apparatus as in any of claims 1-10, further including a second excitation source, and the same or second excitation electrode or electrodes, and a second tracker and second sensing electrode or electrodes in a second region in said passage, and second signal receiving means, all as aforesaid, the frequency of said excitation source being distinctly different from the frequency of said second excitation source.

FIG.3

FIG.2

FIG.1

FIG.4

FIG.6

FIG.5

FIG.7

FIG.9

0118791

3 / 3

FIG. 8A

FIG. 8B

FIG. 8C

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | US-A-4 333 354  (FELLER) <br><br> * Column 1, lines 31-51; column 2, line 47 - column 3, line 6; figures * | 1,4,5, 9,10 | G 01 F    1/10 <br> G 01 F    1/64 <br> H 03 K    5/08 |
| | --- | | |
| Y | US-A-3 626 209  (CHANDOS) <br> * Abstract; figure 3; column 3, line 29 - column 5, line 23 * | 1 | |
| | --- | | |
| A | US-A-4 399 696  (FELLER) <br><br> * Figures * | 1,4,5, 6,7 | |
| | --- | | |
| A | NL-A-8 104 407  (FLONIC S.A.) <br> * Figure 4 * | 1,6 | |
| | ----- | | **TECHNICAL FIELDS SEARCHED (Int Cl. 3)** |
| | | | G 01 F <br> H 03 K <br> F 02 D |

The present search report has been drawn up for all claims

| Place of search <br> THE HAGUE | Date of completion of the search <br> 29-05-1984 | Examiner <br> NUIJTEN E.M. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82